# EUROPEAN PATENT APPLICATION

(11) **EP 3 181 852 A1**
(43) Date of publication of application: **21.06.2017**
(21) Application number: 15199885.3
(22) Date of filing: 14.12.2015
(51) Int. Cl.: F02B 19/10, F02B 19/18

(54) **PRE-CHAMBER BODY FOR INTERNAL COMBUSTION ENGINES**

(71) Applicant: Caterpillar Energy Solutions GmbH, 68167 Mannheim (DE)
(72) Inventor: MAIER, Thomas, 68526 Ladenburg (DE)
(74) Representative: Kramer Barske Schmidtchen Patentanwälte PartG mbB

(57) **Abstract**

The present disclosure generally relates to a pre-chamber body (26) for an internal combustion engine (1), and a method for operating the same. The pre-chamber body (26) may comprise a pre-chamber (34), a plurality of flow transfer channels (22) connecting to an exterior of the pre-chamber body (26), a riser channel (38) extending along a longitudinal axis (A) and being fluidly interconnected between the pre-chamber (34) and the plurality of flow transfer channels (22), and at least one annular protrusion (52; 152) projecting from an inner face (37) of the riser channel (38) and/or from an inner face (42) of the pre-chamber (34) and at least partially into the riser channel (38) and/or the pre-chamber (34). The at least one annular protrusion (52; 152) may include a first side face (54; 154) being substantially perpendicular with respect to the longitudinal axis (A).

## Description

### Technical Field

The present disclosure generally relates to an internal combustion engine. More particularly, the present disclosure relates to a pre-chamber body for an internal combustion engine, a pre-chamber assembly for an internal combustion engine, an internal combustion engine as such, and a method for operating an internal combustion engine including a main combustion chamber and a pre-chamber.

### Background

Gaseous fuel internal combustion engines powered with a lean mixture of gaseous fuel and air may comprise a pre-combustion chamber (also referred to as pre-chamber) per cylinder for ignition purposes. Particularly, large-bore engines may benefit from those pre-chambers as it is otherwise difficult to consistently achieve complete and thorough combustion using lean fuel air mixtures.

Typically, such a pre-chamber is fluidly connected to a main combustion chamber of a respective cylinder via a riser channel and a plurality of flow transfer channels. The flow transfer channel allows the flow of the lean mixture of gaseous fuel and air from the main combustion chamber into the pre-chamber during a compression stroke via the flow transfer channels. Enrichment of the lean mixture in the pre-chamber may be effected by providing a small quantity of (gaseous) fuel into the pre-chamber via a separate fuel feed passage, for example during the intake stroke. The enriched mixture is ignited in the pre-chamber by an igniter such as a spark plug. The ignition of the enriched mixture causes a flame front of hot gases that propagates from the pre-chamber via the riser channel and the flow transfer channels into the main combustion chamber. Thus, the lean mixture in the main combustion chamber ignites and burns, and thereby, expands against a movable piston that drives a crankshaft.

For example, US 2013/0160734 A1 discloses a pre-chamber system for an internal combustion engine. The pre-chamber system has a pre-chamber, a fuel introduction device, and a dead space which connects the fuel introduction device to the pre-chamber. A channel is provided which connects the pre-chamber to the dead space so that the dead space can be flushed to avoid rich zones in the dead space and hence the formation of soot particles.

The present disclosure is directed, at least in part, to improving or overcoming one or more aspects of prior systems.

### Summary of the Disclosure

According to an aspect of the present disclosure, a pre-chamber body for an internal combustion engine may comprise a pre-chamber, a plurality of flow transfer channels connecting to an exterior of the pre-chamber body, a riser channel extending along a longitudinal axis and being fluidly interconnected between the pre-chamber and the plurality of flow transfer channels, and at least one annular protrusion projecting from an inner face of the riser channel and/or from an inner face of the pre-chamber and at least partially into the riser channel and/or the pre-chamber. The at least one annular protrusion may include a first side face being substantially perpendicular with respect to the longitudinal axis.

According to another aspect of the present disclosure, a pre-chamber assembly may comprise a pre-chamber body according to the present disclosure, an ignition device operably coupled to the pre-chamber to ignite an air/fuel mixture therein, and a fuel supply device fluidly connected to the pre-chamber to supply fuel.

According to another aspect of the present disclosure, an internal combustion engine may comprise a plurality of cylinders defining a plurality of main combustion chambers, a cylinder head mounted onto the plurality of cylinders thereby closing the main combustion chambers, and at least one pre-chamber assembly according to the present disclosure. The pre-chamber assembly may be mounted to the cylinder head.

According to another aspect of the present disclosure, a method for operating an internal combustion engine including a main combustion chamber and a pre-chamber may comprise supplying a lean mixture of fuel and air from the main combustion chamber into a riser channel via flow transfer channels fluidly connecting the riser channel to the main combustion chamber, and advancing the lean mixture from the riser channel into the pre-chamber thereby passing an annular protrusion projecting from an inner face of the riser channel and/or from an inner face of the pre-chamber and at least partially into the riser channel and/or the pre-chamber. The annular protrusion may include a first side face extending substantially perpendicular with respect to a riser channel longitudinal axis. The method may further comprise imparting a turbulence into the flow of lean mixture, wherein said flow separating at the annular protrusion.

Other features and aspects of this disclosure will be apparent from the following description and the accompanying drawings.

### Brief Description of the Drawings

The accompanying drawings, which are incorporated herein and constitute a part of the specification, illustrate exemplary embodiments of the disclosure and, together with the description, serve to explain the principles of the disclosure. In the drawings:
Fig. 1 shows a schematic cut view through a portion of an internal combustion engine that is equipped with a pre-chamber body according to the present disclosure;
Fig. 2 shows a schematic cut view through an exemplary pre-chamber assembly according to the present disclosure; and
Fig. 3 shows a schematic cut view through another exemplary pre-chamber assembly according to the present disclosure.

### Detailed Description

The following is a detailed description of exemplary embodiments of the present disclosure. The exemplary embodiments described therein and illustrated in the drawings are intended to teach the principles of the present disclosure, enabling those of ordinary skill in the art to implement and use the present disclosure in many different environments and for many different applications. Therefore, the exemplary embodiments are not intended to be, and should not be considered as, a limiting description of the scope of patent protection. Rather, the scope of patent protection shall be defined by the appended claims.

The present disclosure may be based at least in part on the realization that an inner shape of the pre-chamber together with the riser channel may usually be bottle-shaped wherein the main portion constitutes the pre-chamber and the neck portion constitutes the riser channel. Such pre-chambers and riser channels may have smooth inner surfaces smoothly transitioning into one another. However, due to said smooth inner surfaces, the mixture of fuel and air may be insufficiently mixed within the pre-chamber and the riser channel which may lead to an insufficient ignition pulse of the lean combustion mixture and undesired generation of emissions.

Therefore, an air-fuel ratio (AFR) distribution within the pre-chamber may be very inhomogeneous at ignition time in conventional pre-chambers which are flushed with gaseous fuel. Particularly, an upper region of the pre-chamber where fuel or a rich mixture of fuel and air is directly supplied via a fuel supply device has a lower AFR than a lower region of the pre-chamber and the riser channel connecting the pre-chamber with the main combustion chamber via the plurality of flow transfer channels. In other words, the upper region includes portions having a richer mixture and portions having a leaner mixture. Generally, the pre-chamber may be filled with a richer mixture than the riser channel at the ignition time. In particular, there may be situations in which a portion having a leaner mixture is provided in the vicinity of the ignition electrodes leading to decreased ignitability. In addition, said inhomogeneity in the AFR distribution may result in a deterioration of the combustion velocity and emission formation.

Accordingly, herein it is suggested to provide at least one annular protrusion projecting into the riser channel and/or the pre-chamber thereby proving a flow resistance for the lean mixture flow and the burning mixture. Said protrusion constituting a constriction may have a shape for providing different flow resistances for the lean mixture flow and the burning mixture. Within the meaning of the present disclosure, the lean mixture flow may flow from the main combustion chamber into the pre-chamber via the flow transfer channels and the riser channel prior ignition, wherein the burning mixture may expand and flow from the pre-chamber into the main chamber via the riser channel and the flow transfer channels.

For instance, during compression (i.e. the lean mixture flow is supplied from the main combustion chamber into the pre-chamber via the flow transfer channels and the riser channel), the protrusion acts as a throttle thereby increasing turbulences downstream of said throttle. This may lead to an improved mixing of the lean mixture and the fuel within the pre-chamber, i.e. a more homogenous mixture may be provided within the pre-chamber. Further, ignitability and burning rate of the combustion mixture may be improved and emission generation within the pre-chamber may be reduced.

After ignition, the protrusion generally dividing the pre-chamber and the riser channel in at least two volumes may lead to pressure boosting within said volumes and, as a result, to an enhanced pulse of the burning mixture expanding beyond the protrusion. This may lead to an increased velocity of the burning mixture within the pre-chamber and the riser channel and, finally, to a faster combustion within the main combustion chamber.

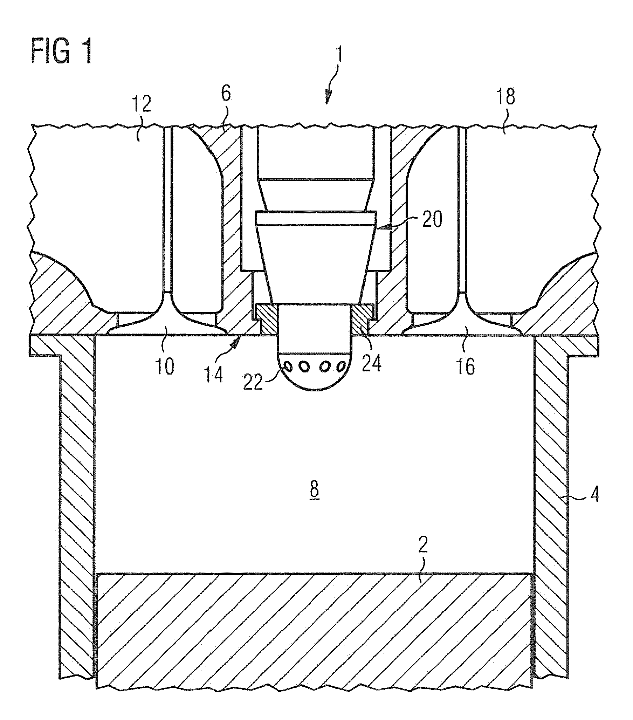

Referring now to the drawings to explain the general principle of the present disclosure by way of example. Fig. 1 depicts a piston 2 arranged in a cylinder 4 of a portion of an internal combustion engine 1 (not shown in further detail). The cylinder 4 is covered by a cylinder head 6. The piston 2, the cylinder 4, and the cylinder head 6 together define a main combustion chamber 8 of the internal combustion engine 1. The piston 2 is reciprocatingly arranged in the cylinder 4 to move between a top dead center and a bottom dead center during operation of the internal combustion engine 1.

For the purpose of describing exemplary embodiments of the present disclosure, the internal combustion engine 1 is considered as a four-stroke internal combustion engine operating at least partly on gaseous fuel such as a gaseous fuel engine or a dual fuel engine. One skilled in the art will appreciate, however, that the internal combustion engine may be any type of engine (turbine, gas, diesel, natural gas, propane, two-stroke, etc.) that would utilize the pre-chamber body and the pre-chamber assembly as disclosed herein.

Furthermore, the internal combustion engine may be of any size, with any number of cylinders, and in any configuration (V-type, in-line, radial, etc.). Moreover, the internal combustion engine may be used to power any machine or other device, including locomotive applications, on-highway trucks or vehicles, off-highway trucks or machines, earth moving equipment, generators, aerospace applications, marine applications, pumps, stationary equipment, or other engine powered applications.

The cylinder head 6 includes at least one inlet valve 10, for example a poppet valve. The inlet valve 10 is accommodated in an inlet channel 12 opening in a piston sided face 14 of the cylinder head 6 for supplying a (lean) mixture of gaseous fuel and air or air only into the main combustion chamber 8. Similarly, at least one outlet valve 16, for example also a poppet valve, is accommodated in an outlet channel 18 of the cylinder head 6 to guide exhaust gas out of the main combustion chamber 8.

The cylinder head 6 further comprises a pre-chamber assembly 20. A plurality of flow transfer channels 22 fluidly connect the main combustion chamber 8 with a riser channel and a pre-chamber (both not visible in Fig. 1) within the pre-chamber assembly 20.

The pre-chamber assembly 20 is installed in the cylinder head 6 via a mounting body 24 as shown in Fig. 1. Alternatively, the pre-chamber assembly 20 may be installed in the cylinder head 6 in any other suitable fashion.

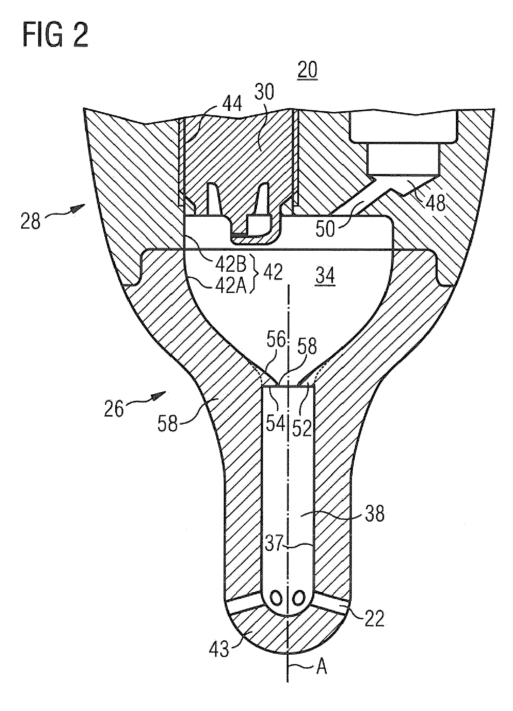

Referring to Fig. 2, a first embodiment of a pre-chamber assembly 20 is shown in a schematic sectional view.

The pre-chamber assembly 20 includes a first pre-chamber body 26, a second pre-chamber body 28, an ignition device 30, and a fuel supply device (not explicitly shown in the drawings). The first pre-chamber body 26 and the second pre-chamber body 28 are connected to one another. The ignition device 30 and the fuel supply device are accommodated in the second pre-chamber body 28.

The first pre-chamber body 26 includes and defines a pre-chamber or pre-chamber main portion 34, a riser channel 38 extending along a longitudinal axis A, and the flow transfer channels 22. In the embodiment shown in Fig. 2, the pre-chamber also extends along the longitudinal axis A.

The riser channel 38 and the flow transfer channels 22 together connect the pre-chamber 34 with an exterior of the first pre-chamber body 26. In an assembled state, the riser channel 38 and the flow transfer channels 22 connect the pre-chamber 34 and the main combustion chamber 8 (see Fig. 1).

As can be seen in Fig. 2, a diameter of the pre-chamber 34 is greater than a diameter of the riser channel 38 which in turn is greater than a diameter of the flow transfer channels 22.

The pre-chamber or main (upper) pre-chamber volume is defined by a pre-chamber inner face 42 of the first pre-chamber body 26. The pre-chamber inner face 42 includes a first section 42A formed in the first pre-chamber body 26, and a second section 42B formed in the second pre-chamber body 28. In the embodiment shown, the first section 42A is a circumferential face concentrically disposed around the longitudinal axis A.

The pre-chamber 34 extends along the longitudinal axis A of the first pre-chamber body 26, is funnel-shaped, and tapers in direction to the riser channel 38. Alternatively, the pre-chamber 34 may have any other shape such as a cylindrical shape, pyramidal shape, conical shape, and combinations thereof. For example, the pre-chamber 34 may have a volume within a range between approximately 0.1 % and 10 % of the compression volume of the cylinder 4 (see Fig. 1).

A bottom section of the pre-chamber 34 transitions into the riser channel 38. That is the pre-chamber inner face 42 transitions into a riser channel inner face 37 of the riser channel 38. The riser channel inner face 37 is a circumferential face concentrically disposed around the longitudinal axis A.

The riser channel 38 extends longitudinally in the first pre-chamber body 26, and opens with one end in the pre-chamber 34. In the configuration shown in Fig. 2, the pre-chamber 34 is aligned with the pre-chamber longitudinal axis A. Alternatively, the pre-chamber 34 may run parallel to the riser channel longitudinal axis A, or may confine an angle with the riser channel longitudinal axis A. The riser channel 38 fluidly connects the pre-chamber 34 and the flow transfer channels 22.

To fluidly connect a bottom section of the riser channel 38 and a top section of the main combustion chamber 8 (see Fig. 1), the flow transfer channels 22 are provided. The flow transfer channels 22 extend through a tip portion 43 of the first pre-chamber body 26 in a curved or straight manner.

The ignition device 30, for example a spark plug, a laser or plasma igniter, an ignition fuel injector, or a glow plug, is installed in the pre-chamber assembly 20 so that the ignition device 30 is operably coupled to the pre-chamber 34.

As used herein, "operably coupled" means that the ignition device 30 is - depending on its ignition mechanism - configured and arranged to ignite an ignitable mixture in the pre-chamber 34. For example, in case the ignition device 30 is a spark plug, the same may extend into the pre-chamber 34. Specifically, electrodes of the spark plug may reach into the pre-chamber 34 so that a spark between the electrodes ignites a mixture in the pre-chamber 34. As another example, in case the ignition device 30 is a laser igniter, the same may be separated from the pre-chamber 34 via a window that is configured to transmit a laser beam from the laser igniter into the pre-chamber 34.

In case the ignition device 30 is configured as an igniter that reaches into the pre-chamber 34 (as is exemplary shown in Fig. 2), the ignition device 30 may be mounted in the first or second pre-chamber body 26, 28 to extend through an ignition device bore 44.

The fuel supply device may be mounted in a fuel supply bore extending through the second pre-chamber body 28. Alternatively, the fuel supply device may be mounted in the first pre-chamber body 26.

The fuel supply device is configured to supply a fuel, for example a gaseous fuel, or a rich mixture of fuel and air into a dead space 48 that is fluidly connected to the pre-chamber 34 via a fuel supply channel 50. The fuel supply channel 50 opens in a top region of the pre-chamber 34 near the ignition device 30 to supply the fuel from the fuel supply device into the pre-chamber 34.

In some embodiments, the fuel supply device may directly reach into the pre-chamber 34. In other words, the dead space 48 in front of the fuel supply device and the fuel supply channel 50 may be omitted.

The first pre-chamber body 26 further includes an annular protrusion 52 extending circumferentially about the longitudinal axis A and projecting radially from the riser channel inner face 37 into the riser channel 38 with respect to the longitudinal axis A. In Fig. 2, a separation between the protrusion 52 and the inner face 37 is indicated in dotted lines. In some embodiments, the protrusion 52 may project radially from the pre-chamber inner face 42 into the pre-chamber 34 with respect to the longitudinal axis A.

The at least one annular protrusion 52 includes a first side face 54 and a second side face 56 opposite to the first side face 54. The first side face 54 and the second side face 54 are connected to one another via a flow separating edge 58 configured to tear-off an air/fuel mixture flow flowing from the riser channel 38 into the pre-chamber 34 along the riser channel inner face 37, which will be described in greater detail below.

The first side face 54 extends substantially perpendicular with respect to the longitudinal axis A. In the embodiment shown in Fig. 2, the first side face 54 is a substantially planar face extending circumferentially about the longitudinal axis A. In an assembled state of the pre-chamber assembly 20, the first side face 54 faces the main combustion chamber 8.

As shown in Fig. 2, the second side face 56 faces the pre-chamber 34 and smoothly transitions into the pre-chamber inner face 42. The second side face 56 substantially extends at the flow separating edge 58 with a predetermined angle with respect to the longitudinal axis A. The predetermined angle may be in a range from about 10° to about 80°, particularly about 0° to about 60°[. Within the present disclosure, the second side face 56 being substantially inclined with respect to the longitudinal axis A means that the second side face 56 does not perpendicularly extend with respect to the longitudinal axis A.

As shown in Fig. 2, the second side face 56 is substantially convex and includes a shape substantially corresponding to a sawtooth. However, in some embodiments, the second side face 56 maybe concave, planar, chamfered, tapered, or may comprise any other suitable shape.

As an effect of the particular shape, the annular protrusion 52 provides a type of throttle or nozzle with an abrupt decrease in diameter followed by a continuous increase in diameter in a direction from the riser channel 38 to the pre-chamber 34 along the longitudinal axis A. For example, the annular protrusion 52 defines a constricted passage having an area being in a range from about 20 % to about 95 % of an area of the riser channel 38 in the vicinity of the annular protrusion 52.

The protrusion 52 is configured to provide a constriction for both a flow of lean air/fuel mixtures from the riser channel 38 into the pre-chamber 34 prior combustion and a flow of burning mixture from the pre-chamber 34 into the riser channel 38 after combustion. Specifically, the protrusion 52 constricts a diameter of the riser channel 38 at a transition region between the pre-chamber 34 and the riser channel 38. More specifically, the protrusion 52 separates the pre-chamber 34 from the riser channel 38, and provided two sub-volumes.

For example, the pre-chamber 34 has a first volume and the riser channel 38 has a second volume. For instance, the first volume may be in a range from about 20 % to about 600 % of the second volume.

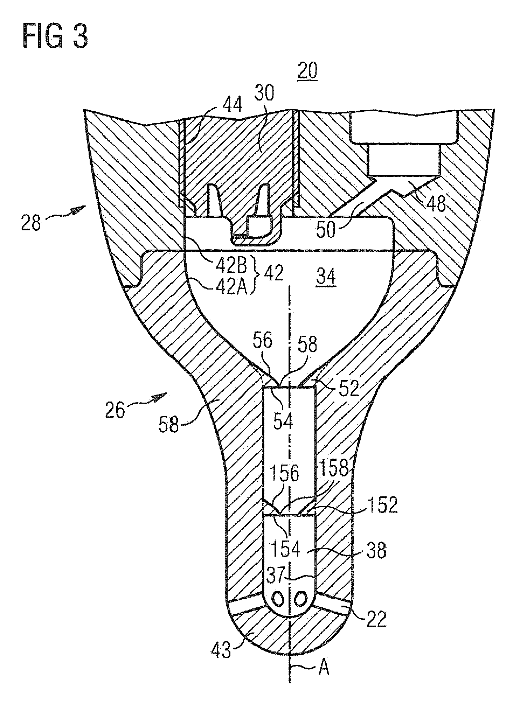

Referring to Fig. 3, another exemplary embodiment of the first pre-chamber body 26 is shown. The first pre-chamber body 26 of Fig. 3 is substantially similar to the first pre-chamber body 26 of Fig. 2 with an additional annular protrusion 152. Therefore, the features and functions already described with respect to the protrusion 52 may also substantially apply to the additional protrusion 152. It should be appreciated that the protrusion 152 may be provided alternatively to the protrusion 52.

In Fig. 3, the additional annular protrusion 152 is provided in a central portion of the riser channel 38 and projects radially from the riser channel inner face 37 with respect to the longitudinal axis A. In some embodiments, the additional protrusion 152 may be provided at any other suitable position between the protrusion 52 and the flow transfer channels 22. In yet some embodiments, more than one of the protrusions 152 may be provided at the riser channel inner face 37 and distributed along the longitudinal axis A.

The additional annular protrusion 152 includes a first side face 154, a second side face 156 opposite to the first side face 154, and a flow separating edge 158 connecting the first side face 154 and the second side face 156 to one another.

The annular protrusion 152 may divide the volume of the riser channel 38 into two sub-volumes. In the embodiment shown in Fig. 3, as the riser channel 38 is substantially cylindrical in shape and as the annular protrusion 152 is provided in a central portion of the riser channel 38 with respect to the longitudinal axis A, the protrusion 152 halves the riser channel volume. However, in some embodiments, the protrusion 152 may divide the riser channel volume into two sub-volumes with a ratio being in a range from about 20: 80 to 80:20. In some embodiments, the riser channel 38 may include a shape substantially corresponding to a funnel.

### Industrial Applicability

The pre-chamber as exemplary disclosed herein is particularly applicable in a stationary or marine large-bore gaseous fuel internal combustion engine operating on a lean fuel mixture. However, one skilled in the art will appreciate that other internal combustion engines may be equipped with the pre-chamber as disclosed herein as well.

In the following, operation of the internal combustion engine 1 in conjunction with the functionality of the pre-chamber assembly 20 is described with reference to Figs. 1 to 3

During operation of the internal combustion engine 1, for example during compression, a mixture of fuel and air, for example a lean mixture of fuel and air (in the following referred to as "lean mixture flow"), enters the riser channel 38 from the main combustion chamber 8. Specifically, the mixture of fuel and air passes through the flow transfer channels 22 into the riser channel 38.

Within the riser channel 38, the lean mixture flow may substantially flow along the riser channel inner face 37. Then, the lean mixture flow flows against protrusion 52 acting as a kind of throttle. Specifically, the lean mixture flows against the first side face 54 and substantially tears-off at the flow separating edge 58. Such separation of the lean mixture flow at the flow separating edge 58 results in turbulences within the lean mixture flow downstream of the protrusion 52.

Additionally, a rich mixture of fuel and air or fuel only, for example gaseous fuel, is supplied into the pre-chamber 34 via the fuel supply device. Specifically, the fuel supply device supplies fuel (and air) into the dead space 48, which flows into an upper section of the pre-chamber 34. There, the fuel mixes with the lean mixture originating from the main combustion chamber 8. Due to the increased turbulences within the lean mixture flow imparted by the protrusion 52, mixing of the lean mixture flow and the rich mixture of fuel (and air) may be improved leading to a more homogenous combustion mixture within the pre-chamber 34.

Subsequently, after ignition, the burning mixture expands and flows back from the pre-chamber 34 towards the riser channel 38. The burning mixture then flows against the protrusion 52. This may lead to pressure boosting within the pre-chamber 34 and, as a result, to an enhanced pulse of the burning mixture expanding beyond the protrusion 52. Thus, the burning mixture may accelerate leading to an increased velocity of the burning mixture within the pre-chamber 34 and within the riser channel 38, which in turn may lead to a faster combustion within the main combustion chamber 8.

In particular, each of the protrusions 52, 152 may increase the pressure within the pre-chamber 34 and may increase the flow velocity at the protrusions 52, 152 acting as throttles. This may result in an increases ignition pulse as the pulse of the burning mixtures from the first volume into the second volume may be increased.

Terms such as "about", "approximately", or "substantially" as used herein when referring to a measurable value such as a parameter, an amount, a temporal duration, a direction, and the like, is meant to encompass variations of ± 10 % or less, preferably ± 5 % or less, more preferably ± 1 % or less, and still more preferably ±0.1 % or less of and from the specified value, insofar as such variations are appropriate to perform in the disclosed invention. It is to be understood that the value to which the modifier "about" refers is itself also specifically, and preferably, disclosed. The recitation of numerical ranges by endpoints includes all numbers and fractions subsumed within the respective ranges, as well as the recited endpoints.

Although the preferred embodiments of this invention have been described herein, improvements and modifications may be incorporated without departing from the scope of the following claims.

## Claims

1. A pre-chamber body (26) for an internal combustion engine (1), the pre-chamber body (26) comprising:
a pre-chamber (34);
a plurality of flow transfer channels (22) connecting to an exterior of the pre-chamber body (26);
a riser channel (38) extending along a longitudinal axis (A) and being fluidly interconnected between the pre-chamber (34) and the plurality of flow transfer channels (22); and
at least one annular protrusion (52; 152) projecting from an inner face (37) of the riser channel (38) and/or from an inner face (42) of the pre-chamber (34) and at least partially into the riser channel (38) and/or the pre-chamber (34), the at least one annular protrusion (52; 152) including a first side face (54; 154) being substantially perpendicular with respect to the longitudinal axis (A).

2. The pre-chamber body (26) of claim 1, wherein at least one annular protrusion (52) is provided at an transition region between the pre-chamber (34) and the riser channel (38).

3. The pre-chamber body (26) of any one of the preceding claims, wherein the at least one annular protrusion (52; 152) defines a constricted passage having an area being in a range from about 20 % to about 95 % of an area of the riser channel (38) in the vicinity of the annular protrusion (52).

4. The pre-chamber body (26) of any one of the preceding claims, wherein the at least one protrusion (52; 152) includes a second side face (56; 156) opposite to the first side face (54; 154), the second side face (56; 156) substantially extending under a predetermined angle with respect to the longitudinal axis (A), the predetermined angle being in a range from about 10° to about 80°.

5. The pre-chamber body (26) of claim 4, wherein the second side face (56; 156) faces the pre-chamber (34).

6. The pre-chamber body (26) of any one of claims 4 and 5, wherein the second side face (54) smoothly transitions into an inner face (42) of the pre-chamber (34).

7. The pre-chamber body (26) of any one of the preceding claims, wherein the pre-chamber (34) has a first volume and the riser passage () has a second volume, the first volume being in a range from about 20 % to about 600 % of the second volume.

8. The pre-chamber body (26) of any one of the preceding claims, wherein at least one annular protrusion (152) is provided at an axial central portion of the riser channel (38) with respect to the longitudinal axis (A).

9. The pre-chamber body (26) of claim 8, wherein the at least one annular protrusion (152) is configured to substantially halve the riser channel volume.

10. The pre-chamber body (26) of any one of the preceding claims, wherein the at least one protrusion (52; 152) is provided axially above the flow transfer channels (22) with respect to the longitudinal axis (A).

11. A pre-chamber assembly (20) comprising:
a pre-chamber body (26) of any one of the preceding claims;
an ignition device (30) operably coupled to the pre-chamber (34) to ignite an air/fuel mixture therein; and
a fuel supply device fluidly connected to the pre-chamber (34) to supply fuel.

12. An internal combustion engine (1) comprising:
a plurality of cylinders (4) defining a plurality of main combustion chambers (8);
a cylinder head (6) mounted onto the plurality of cylinders (4) thereby closing the main combustion chambers (8); and
at least one pre-chamber assembly (20) of claim 11, the pre-chamber assembly (20) being mounted to the cylinder head (6).

13. A method for operating an internal combustion engine (1) including a main combustion chamber (8) and a pre-chamber (34), the method comprising:
supplying a lean mixture of fuel and air from the main combustion chamber (8) into a riser channel (38) via flow transfer channels (22) fluidly connecting the riser channel (38) to the main combustion chamber (8);
advancing the lean mixture from the riser channel (38) into the pre-chamber (34) thereby passing an annular protrusion (52; 152) projecting from an inner face (37) of the riser channel (38) and/or from an inner face (42) of the pre-chamber (34) and at least partially into the riser channel (38) and/or the pre-chamber, the annular protrusion (52; 152) including a first side face (54; 154) extending substantially perpendicular with respect to a riser channel longitudinal axis (A); and
imparting a turbulence into the flow of lean mixture, said flow separating at the annular protrusion (52; 152).

14. The method of claim 13, further comprising:
imparting a turbulence into the flow of lean mixture flowing within the riser channel (38) towards the pre-chamber (34) by providing at least one further annular protrusion (152) at an central portion of the riser channel (38) with respect to the longitudinal axis (A).

15. The method of any one of claims 13 and 14, further comprising:
directing the burning mixture from the pre-chamber (34) into the riser channel (38) thereby re-passing the annular protrusion (52; 152) and accelerating the burning mixture; and
advancing the burning mixture from the riser channel (38) into the main combustion chamber (8) via the plurality of flow transfer channels (22).
